# EUROPEAN PATENT SPECIFICATION

(11) **EP 3 985 314 B1**
(45) Date of publication and mention of the grant of the patent: **30.04.2025**
(21) Application number: 20202515.1
(22) Date of filing: 19.10.2020
(51) Int. Cl.: F24D 19/10, F16K 31/00, G05D 23/00, G05D 23/19

(54) **VALVE ATTACHMENT OF A VALVE FOR A HEAT EXCHANGER**
VENTILAUFSATZ EINES VENTILS FÜR EINEN WÄRMETAUSCHER
FIXATION D'UNE VANNE POUR UN ÉCHANGEUR DE CHALEUR

(43) Date of publication of application: 20.04.2022
(73) Proprietor: Danfoss A/S, 6430 Nordborg (DK)
(72) Inventor: Hesseldahl, Søren, 6430 Nordborg (DK); Clausen, Anders Østergaard, 6430 Nordborg (DK); Gammeljord, Peter, 6430 Nordborg (DK)
(74) Representative: Keil & Schaafhausen Patentanwälte PartGmbB

(56) References cited:
- EP-A1- 3 193 064
- EP-A1- 3 246 782
- DE-A1- 10 029 825
- DE-A1- 102018 110 439
- GB-A- 2 452 043

## Description

The present invention relates to a valve attachment of a heat exchanger valve, said valve attachment comprising a main part of a housing, valve actuating means arranged in the main part of the housing, control means arranged in the main part of the housing and controlling the valve actuating means, a valve coupling zone, and at least one temperature sensor.

Such a valve attachment is known, for example, from EP 3 246 782.

DE 10 2018 110 439 A1 describes a thermostatic head for adjusting a radiator. The thermostatic head measures the temperature of the flow and return of the radiator. To measure the temperature of the flow, one possibility is to measure the temperature of the valve plunger.

DE 100 29 825 A1 describes a room temperature regulator having one or more heat pipes, each with two thermally conducting transition zones, thermal capacity such that heating medium temperature influence is negligible.

EP 3 193 064 A1 describes a valve comprising a valve housing, a valve seat, and a valve element. The valve element is displaceable relative to the housing along an axis towards the valve seat. The valve seat is arranged in a valve seat member, wherein the valve seat member is rotatable around the axis to change the maximum effective flow cross section through the valve.

GB 2 452 043 A describes a radiator thermostatic control for regulating the flow of heating fluid in a conduit attached to a radiator comprising actuation means operable to alter the flow of heating fluid in the conduit, processing means for controlling the actuation means, a first temperature sensor for sensing the ambient temperature in vicinity of the device, and a second temperature sensor for sensing the temperature of the conduit.

The valve attachment is used to control the opening degree of a valve, wherein the valve controls a flow of a heat carrier fluid through a heat exchanger, for example through a radiator.

The invention is described in the following in connection with heating means. However, it can likewise be used in connection with other means influencing a temperature in a room.

The valve attachment should control the valve of the radiator or another heat exchanger in a way that a desired temperature is reached in a room. To this end a temperature set point value is set. The valve attachment is connected to or comprises a temperature sensor detecting the actual temperature. The valve attachment controls the valve depending on the difference between the temperature set point value and the actual value.

When the temperature sensor is located in the valve attachment, it is not only influenced by the room temperature, but also by the temperature of the heat carrying medium flowing through the valve. This medium heats the valve housing. Heat from the valve housing is radiated to the valve attachment or influences a temperature of the valve attachment in another way. It is therefore desirable to get an information about the temperature of the heating medium to take this temperature into account when controlling the valve.

The object underlying the invention is to get a sufficiently precise temperature information of the heat carrying medium in a valve connected to the valve attachment.

The task is solved by the features of claim 1.

In this way it is possible to obtain directly the temperature of the heat carrying medium flowing through the valve. The valve housing has the temperature of the heat carrying medium. When the thermally conducting element is arranged in the valve housing contact area, it has a direct contact to the valve housing, so that the temperature of the valve housing is transferred to the thermally conducting element. The thermally conducting element is preferably made from a metal, like copper or aluminium, having sufficiently good heat conducting characteristics. Thus, the temperature of the valve housing is transferred by the thermally conducting element to the temperature sensor or a carrier of the temperature sensor.

In an embodiment of the invention the thermally conducting element has a cylindrical shape. In this case the thermally conducting element contacts the circumference of a valve housing.

In an embodiment of the invention the thermally conducting element is of annular shape. In this case, the thermally conducting element contacts a front face of the valve housing. It is also possible that the thermally conducting element comprises a part of cylindrical shape and a part of annular shape. In this case, the thermally conducting element contacts a circumferential face of the valve housing and a front face of the valve housing at the same time.

In an embodiment of the invention the thermally conducting element comprises a ring-like section covering the valve housing contact area over at least 210° in circumferential direction. The thermally conducting element is in form of a ring having a gap. The gap allows a slight compression of the thermally conducting element when the valve attachment is mounted to the valve housing. When the thermally conducting element surrounds the valve housing by at least 210° in circumferential direction, there is a large contact area between the valve housing and the thermally conducting element so that a good heat transfer from the valve housing to the thermally conducting element is achieved.

In an embodiment of the invention the thermally conducting element comprises an extension extending in a direction to the main part of the housing. This extension is used to transfer the temperature of the valve housing to a point closer to the main part of the housing of the valve attachment. This has the advantage that the temperature sensor can be arranged at a certain distance to the valve housing.

In an embodiment of the invention in case of a cylindrical shape the extension continues in a U-shape from the ring-like section and in case of an annular shape continues perpendicular from the ring-like section. In the first case the ring-like section and the extension form a kind of a clamp which can be used to secure the thermally conducting element at the valve attachment. In the second case the extension can simply be used to establish a connection between the ring-like section and the temperature sensor or the carrier of the temperature sensor.

In an embodiment of the invention the valve coupling zone is arranged in a socket of the housing, wherein the temperature sensor is located in the socket. The housing of the valve attachment comprises the main part and the socket. The socket is primarily intended for fixing the valve attachment to the valve housing. The main part of the valve attachment comprises the control means and the actuating means. The socket and the main part of the housing can be separate parts which are connected during assembly of the valve attachment. In this way it is possible to locate the temperature sensor and the thermally conducting element together in the socket.

In an embodiment of the invention the socket comprises a pocket in which the temperature sensor is arranged, wherein the pocket is open to the main part of the housing. When the socket and the main part of the housing are assembled, the temperature sensor can be inserted into the pocket through the open end.

In an embodiment of the invention the pocket is open to an end of the socket opposite to the main part of the housing and the extension of the thermally conducting element extends into the pocket. The extension of the thermally conducting element and the temperature sensor are inserted from opposite sides into the pocket. This facilitates the assembly of the valve attachment.

In an embodiment of the invention the thermally conducting element comprises a clamping zone which is open in a direction towards the main part of the housing and in which the thermally conducting element is clamped to the temperature sensor or the carrier of the temperature sensor. Thus, the assembly of the valve attachment can be made simple. When the clamping zone is open in a direction towards the housing, the thermally conducting element can be shifted or pushed onto the temperature sensor or the carrier of the temperature sensor.

Only a movement of the thermally conducting element in a direction towards the temperature sensor is necessary.

In an embodiment of the invention the clamping zone is arranged at the extension, in particular at an end of the extension. Thus, the temperature sensor can be arranged at a certain distance to the valve housing contact area. Nevertheless, the required temperature information can be transferred to the temperature sensor by the thermally conducting element.

In an embodiment of the invention in the clamping zone the extension is bent at least twice, wherein the extension comprises a first section running towards the main part of the housing, a second section running away from the main part of the housing, and a third section running towards the main part of the housing. The second section and the third section can form the clamping zone. Since the second section is bent in relation to the first section, the clamping zone is flexible to a certain extent and is therefore able to contact the temperature sensor or the carrier of the temperature sensor even when there are large tolerances in the position of the temperature sensor.

In an embodiment of the invention the second section and the third section form an accommodation space for the temperature sensor or the carrier of the temperature sensor, wherein the accommodation space has a varying height, the height being smallest in a middle section of the accommodation space. Thus, the accommodation space has a rather large opening for entry of the temperature sensor or the carrier of the temperature sensor. The temperature sensor or the carrier of the temperature sensor are then clamped in the middle section. The clamping force is sufficient to press the temperature sensor or the carrier of the temperature sensor against the second section so that the necessary heat transfer can be achieved. The temperature sensor assumes the temperature of the thermally conducting element.

In an embodiment of the invention the temperature sensor is arranged on a carrier which is connected to the control means. The carrier can be, for example, a printed circuit board (PCB). The carrier has a sufficient stiffness so that a contact between the carrier and the thermally conducting element can be achieved. In many cases it is sufficient that the thermally conducting element contacts only the carrier.

In an embodiment of the invention the carrier extends into the pocket. Thus, when the socket is pushed onto the main part of the housing, the carrier can be pushed into the clamping zone.

In an embodiment of the invention the carrier is flat at least in a part engaging the clamping zone. Thus, a flat touch between the carrier and the thermally conducting element can be achieved.

In an embodiment of the invention the carrier has a number of slits or openings. The slits or openings create a thermal resistance so that the heat transfer to the control means is minimized. Only the information about the temperature is transmitted by means of the temperature sensor.

An embodiment of the invention is now described with reference to the drawing, wherein:
- Fig. 1: shows part of a valve attachment,
- Fig. 2: shows the valve attachment partly in section,
- Fig. 3: shows a detail of the valve attachment,
- Fig. 4: shows parts of a second embodiment of a valve attachment and
- Fig. 5: shows the second embodiment of the valve attachment partly in section.

In all Fig. the same elements are denoted with the same reference numerals.

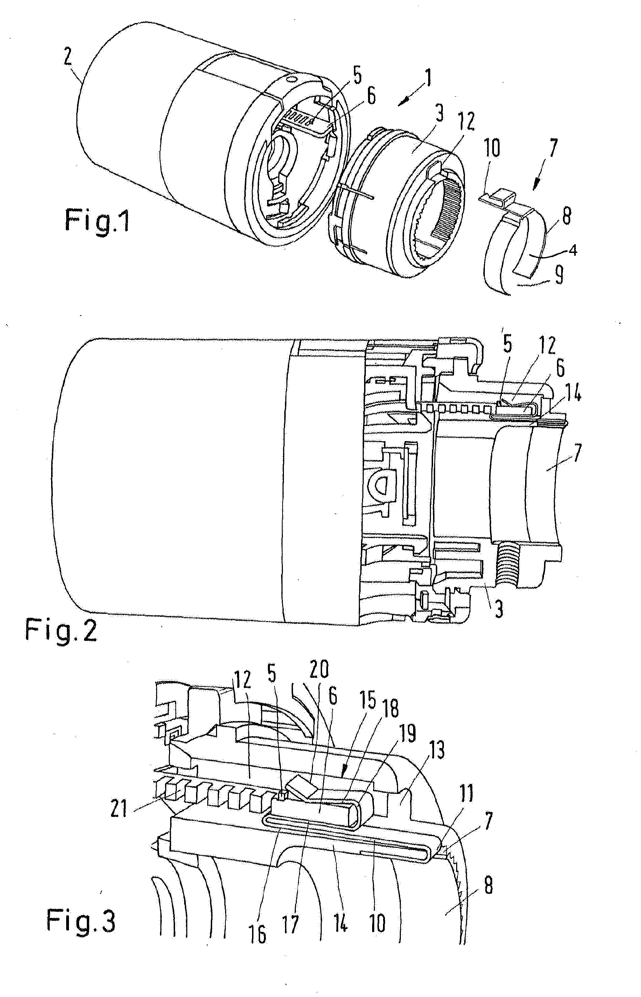

Fig. 1 shows part of a valve attachment 1 in a perspective view.

The valve attachment 1 comprises a housing having a main part 2 and a socket 3. In a way not shown, valve actuating means and control means controlling the valve actuating means are arranged in the main part 2 of the housing. Furthermore, the main part 2 comprises at least one temperature sensor, preferably more than one temperature sensor. One of the temperatur sensors can, for example, measure the temperatur around the main part 2.

The socket 3 comprises a coupling zone which is used to connect the attachment 1 to a valve (not shown). The coupling zone comprises a valve housing contact area 4. The valve contact area 4 is the area which is in contact with a valve housing (not shown) when the valve attachment 1 is connected to the valve.

The socket 3 and the main part 2 of the valve attachment are separate parts. However, during assembling of the valve attachment 1 the main part 2 and the socket are connected. When the socket 3 is connected to the main part 2 it is in many cases not possible to separate these parts without destroying one of these parts.

The main part 2 comprises a temperature sensor 5 mounted on a carrier 6. The carrier 6 can be in form of a printed circuit board (PCB). The carrier 6 extends out of the interior of the main part 2 into the socket 3 once the socket 3 is mounted to the main part 2. This situation is shown in Fig. 2 and 3.

A thermally conducting element 7 is mounted in the socket 3, more precisely in the valve housing contact area 4. The thermally conducting element 7 comprises a ring-like section 8. The ring-like section 8 forms a ring having a gap 9. The ring extends over at least 210° in circumferential direction.

The thermally conducting element 7 comprises an extension 10. The extension 10 is connected to the ring-like section 8 by an U-shaped bent. Thus, the extension 10 extends from the ring-like section 8 in a direction towards the housing, more precisely towards the main part 2 of the housing.

The thermally conducting element 7 is inserted into the socket 3, as can be seen in Fig. 2 and 3. To this end the socket comprises a pocket 12 which is open at an end at the side of the main part of the housing. The pocket 12 comprises a second opening 13 which is arranged at a side of the socket 3 opposite to the main part 2 of the housing. The extension 10 is inserted into this second opening 13.

The socket 3 comprises an inner wall 14 surrounding the valve housing contact area 4. This inner wall 14 is arranged between the ring-like section 8 and the extension 10, so that the thermally conducting element 7 can slightly be clamped in the socket 3.

As can be seen in particular in Fig. 3, the thermally conducting element 7 comprises a clamping zone 15 which is open in a direction towards the main part 2 of the housing. The carrier 6 of the temperature sensor 5 is inserted into the clamping zone 15 and is clamped to the thermally conducting element 7 in this clamping zone 15. The clamping zone 15 is arranged at the extension 10, preferably at an end of the extension 10.

To this end the extension 10 is bent twice. The extension 10 comprises a first section 16 running towards the main part 2 of the housing and basically parallel to the inner wall 14. Furthermore, the extension 10 comprises a second section 17 running away from the main part 2 of the housing and a third section 18 running again towards the main part 2 of the housing. The second section 17 and the third section 18 form an accommodation space 19 for the carrier 6. The accommodation space 19 comprises a rather large opening for insertion of the carrier 6. The height of the accommodation space 19 is then reduced. The third section comprises a kink 20. The third section 18 exerts a clamping force on the carrier 6 mainly in said kink 20.

The carrier 6 is flat in the accommodation space 19. The second section 17 of extension 10 is also flat, so that a flat touch between the second section 17 and the carrier 6 can be achieved.

As can be seen in Fig. 2 and 3, the carrier 6 comprises a number of openings or slits 21. Thus, the mechanical stability of the carrier 6 is maintained while an adverse influence of an air circulation in the valve attachment can be reduced.

The carrier 6 can be a part of the control means, i.e. other parts of the control means can be arranged on the same PCB as the temperature sensor 5. However, it is also possible to use a carrier 6 separate from the control means and to establish the connection between the carrier 6 and the control means in another way.

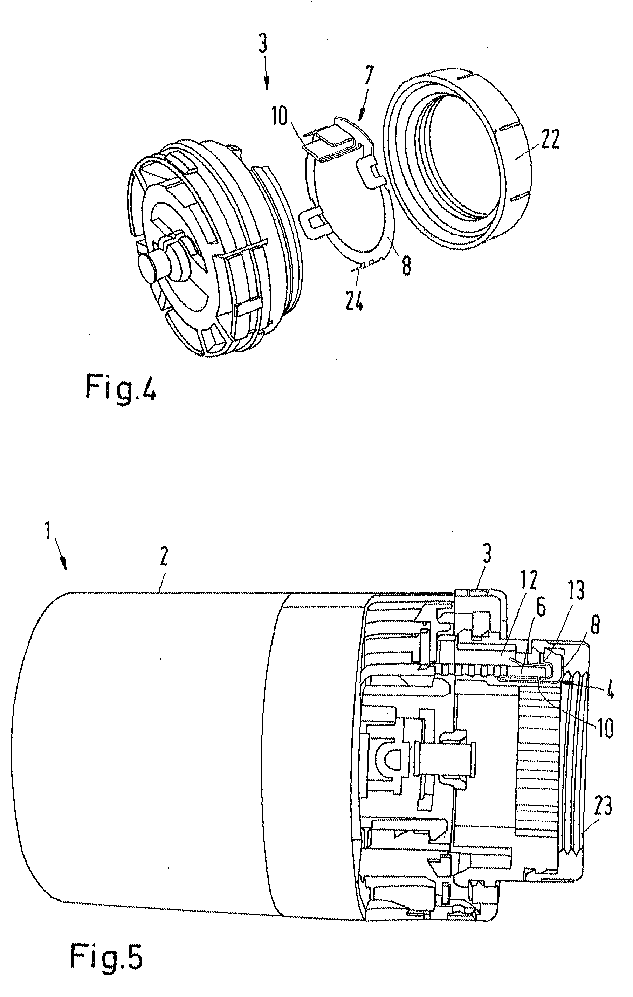

Fig. 4 and 5 show a second embodiment of the invention.

The valve attachment 1 comprises a nut 22 which is used to secure the valve attachment 1 to the valve housing. The nut 22 comprises an inner thread 23 which can be screwed on a corresponding outer thread on the valve housing.

In the embodiment of Fig. 1 to 3 the thermally conducting element 7 is of cylindrical shape, i.e. it can contact the valve housing over at least a part of its circumference.

In the embodiment shown in Fig. 4 and 5 the thermally conducting element 7 has also a ring-like section 8. However, this ring-like section 8 is of annular shape. This ring-like section 8 is intended to contact a front face of the valve housing.

The extension 10 protrudes perpendicular from the ring-like section 8. Further flaps 24 can be provided to secure the thermally conducting element 7 in the socket 3.

In a way not shown, the embodiments of Fig. 1 to 3 and 4 and 5 can be combined so that the thermally conducting element 7 contacts the front face of the valve housing and at the same time at least parts of the circumferential face of the valve housing.

In any case, the form of the extension 10 and the contact to the temperature sensor is the same as in the embodiment shown in Fig. 1 to 3.

## Claims

1. Valve attachment (1) of a valve for a heat exchanger, said valve attachment (1) comprising a main part (2) of a housing, valve actuating means arranged in the main part (2) of the housing, control means arranged in the main part (2) of the housing and controlling the valve actuating means, a valve coupling zone, a socket (3) and at least one temperature sensor (5), **characterized in that** a thermally conducting element (7) is mounted in the socket (3), wherein at least part of the thermally conducting element (7) forms a valve housing contact area (4), and the temperature sensor (5) or a carrier (6) of the temperature sensor (5) is connected to the thermally conducting element (7).

2. Valve attachment according to claim 1, **characterized in that** the thermally conducting element (7) has a cylindrical shape.

3. Valve attachment according to claim 1, **characterized in that** the thermally conducting element (7) is of annular shape.

4. Valve attachment according to any of claims 1 to 3, **characterized in that** the thermally conducting element (7) comprises a ring-like section (8) covering the valve housing contact area (4) over at least 210° in circumferential direction.

5. Valve attachment according to claim 4, **characterized in that** the thermally conducting element (7) comprises an extension (10) extending in a direction to the main part (2) of the housing.

6. Valve attachment according to claim 5, **characterized in that** in case of a cylindrical shape of the thermally conducting element (7) the extension (10) continues in a U-shape from the ring-like section (8) and in case of an annular shape of the thermally conducting element (7) continues perpendicular from the ring-like section (8).

7. Valve attachment according to any of claims 1 to 6, **characterized in that** the valve coupling zone is arranged in a socket (3) of the housing, wherein the temperature sensor (5) is located in the socket (3).

8. Valve attachment according to claim 7, **characterized in that** the socket (3) comprises a pocket (12) in which the temperature sensor (5) is arranged, wherein the pocket (12) is open to the main part (2) of the housing, wherein the pocket (12) is in particular open to an end of the socket opposite to the main part (2) of the housing and the extension (10) of the thermally conducting element (7) extends into the pocket (12).

9. Valve attachment according to any of claims 1 to 8, **characterized in that** the thermally conducting element (7) comprises a clamping zone (15) which is open in a direction towards the main part (2) of the housing and in which the thermally conducting element (7) is clamped to the temperature sensor (5) or the carrier (6) of the temperature sensor (5).

10. Valve attachment according to claim 9, **characterized in that** the clamping zone (15) is arranged at the extension (10), in particular at an end of the extension (10).

11. Valve attachment according to claim 9 or 10, **characterized in that** in the clamping zone (15) the extension (10) is bent at least twice, wherein the extension (10) comprises a first section (16) running towards the main part (2) of the housing, a second section (17) running away from the main part (2) of the housing and a third section (18) running towards the main part (2) of the housing, wherein in particular the second section (17) and the third section (18) form an accommodation space (19) for the temperature sensor (5) or the carrier (6) of the temperature sensor (5), wherein the accommodation space (19) has a varying height, the height being smallest in a middle section of the accommodation space (19).

12. Valve attachment according to any of claims 1 to 11, **characterized in that** the temperature sensor (5) is arranged on a carrier (6) which is connected to the control means.

13. Valve attachment according to claims 8 and 12, **characterized in that** the carrier (6) extends into the pocket (12).

14. Valve attachment according to claim 12 or 13, **characterized in that** the carrier (6) is flat at least in a part engaging the clamping zone (15).

15. Valve attachment according to any of claims 12 to 14, **characterized in that** the carrier (6) has a number of slits (21) or openings.

## Patentansprüche

1. Ventilaufsatz (1) für ein Ventil eines Wärmetauschers, wobei der Ventilaufsatz (1) einen Hauptteil (2) eines Gehäuses, ein Ventilbetätigungsmittel, das in dem Hauptteil (2) des Gehäuses angeordnet ist, Steuermittel, die in dem Hauptteil (2) des Gehäuses angeordnet sind und die Ventilbetätigungsmittel steuern, eine Ventilkopplungszone, einen Sockel (3) und mindestens einen Temperatursensor (5) umfasst, **dadurch gekennzeichnet, dass** in den Sockel (3) ein thermisch leitendes Element (7) montiert ist, wobei mindestens ein Teil des thermisch leitenden Elements (7) einen Ventilgehäusekontaktbereich (4) bildet und der Temperatursensor (5) oder ein Träger (6) des Temperatursensors (5) mit dem thermisch leitenden Element (7) verbunden ist.

2. Ventilaufsatz nach Anspruch 1, **dadurch gekennzeichnet, dass** das thermisch leitende Element (7) eine Zylinderform aufweist.

3. Ventilaufsatz nach Anspruch 1, **dadurch gekennzeichnet, dass** das thermisch leitende Element (7) eine Kranzform aufweist.

4. Ventilaufsatz nach einem der Ansprüche 1 bis 3, **dadurch gekennzeichnet, dass** das thermisch leitende Element (7) einen ringartigen Abschnitt (8) umfasst, der den Ventilgehäusekontaktbereich (4) über 210° in Umlaufrichtung bedeckt.

5. Ventilaufsatz nach Anspruch 4, **dadurch gekennzeichnet, dass** das thermisch leitende Element (7) eine Erweiterung (10) umfasst, die sich in einer Richtung zu dem Hauptteil (2) des Gehäuses erstreckt.

6. Ventilaufsatz nach Anspruch 5, **dadurch gekennzeichnet, dass** sich die Erweiterung (10) im Fall einer Zylinderform des thermisch leitenden Elements (7) in einer U-Form von dem ringartigen Abschnitt (8) fortsetzt und sich im Fall einer Kranzform des thermisch leitenden Elements (7) senkrecht von dem ringartigen Abschnitt (8) fortsetzt.

7. Ventilaufsatz nach einem der Ansprüche 1 bis 6, **dadurch gekennzeichnet, dass** die Ventilkopplungszone in einem Sockel (3) des Gehäuses angeordnet ist, wobei sich der Temperatursensor (5) in dem Sockel (3) befindet.

8. Ventilaufsatz nach Anspruch 7, **dadurch gekennzeichnet, dass** der Sockel (3) ein Fach (12) umfasst, in dem der Temperatursensor (5) angeordnet ist, wobei das Fach (12) zu dem Hauptteil (2) des Gehäuses hin offen ist, wobei das Fach (12) insbesondere zu einem Ende des Sockels gegenüber dem Hauptteil (2) des Gehäuses hin offen ist und sich die Erweiterung (10) des thermisch leitenden Elements (7) in das Fach (12) hinein erstreckt.

9. Ventilaufsatz nach einem der Ansprüche 1 bis 8, **dadurch gekennzeichnet, dass** das thermisch leitende Element (7) eine Klemmzone (15) umfasst, die in einer Richtung hin zu dem Hauptteil (2) des Gehäuses offen ist und in der das thermisch leitende Element (7) an den Temperatursensor (5) oder den Träger (6) des Temperatursensors (5) geklemmt ist.

10. Ventilaufsatz nach Anspruch 9, **dadurch gekennzeichnet, dass** die Klemmzone (15) an der Erweiterung (10) angeordnet ist, insbesondere an einem Ende der Erweiterung (10).

11. Ventilaufsatz nach Anspruch 9 oder 10, **dadurch gekennzeichnet, dass** die Erweiterung (10) in der Klemmzone (15) mindestens zweimal gebogen ist, wobei die Erweiterung (10) einen ersten Abschnitt (16) umfasst, der hin zu dem Hauptteil (2) des Gehäuses verläuft, einen zweiten Abschnitt (17), der weg von dem Hauptteil (2) des Gehäuses verläuft, und einen dritten Abschnitt (18), der hin zu dem Hauptteil (2) des Gehäuses verläuft, wobei insbesondere der zweite Abschnitt (17) und der dritte Abschnitt (18) einen Unterbringungsraum (19) für den Temperatursensor (5) oder den Träger (6) des Temperatursensors (5) bilden, wobei der Unterbringungsraum (19) eine variable Höhe aufweist, wobei die Höhe in einem Mittelabschnitt des Unterbringungsraumes (19) am kleinsten ist.

12. Ventilaufsatz nach einem der Ansprüche 1 bis 11, **dadurch gekennzeichnet, dass** der Temperatursensor (5) an einem Träger (6) angeordnet ist, der mit den Steuermitteln verbunden ist.

13. Ventilaufsatz nach den Ansprüchen 8 und 12, **dadurch gekennzeichnet, dass** sich der Träger (6) in das Fach (12) hinein erstreckt.

14. Ventilaufsatz nach Anspruch 12 oder 13, **dadurch gekennzeichnet, dass** der Träger (6) mindestens in einem Teil, der mit der Klemmzone (15) in Eingriff steht, eben ist.

15. Ventilaufsatz nach einem der Ansprüche 12 bis 14, **dadurch gekennzeichnet, dass** der Träger (6) eine Anzahl von Schlitzen (21) oder Öffnungen aufweist.

## Revendications

1. Accessoire (1) de robinet d'un robinet pour un échangeur de chaleur, ledit accessoire (1) de robinet comprenant une pièce principale (2) d'un boîtier, un moyen d'actionnement de robinet agencé dans la pièce principale (2) du boîtier, un moyen de commande agencé dans la pièce principale (2) du boîtier et commandant le moyen d'actionnement de robinet, une zone d'accouplement de robinet, une douille (3) et au moins un capteur de température (5), **caractérisé en ce qu'**un élément thermiquement conducteur (7) est monté dans la douille (3), au moins une partie de l'élément thermiquement conducteur (7) formant une zone de contact (4) avec un corps de robinet, et le capteur de température (5) ou un support (6) du capteur de température (5) étant relié à l'élément thermiquement conducteur (7).

2. Accessoire de robinet selon la revendication 1, **caractérisé en ce que** l'élément thermiquement conducteur (7) présente une forme cylindrique.

3. Accessoire de robinet selon la revendication 1, **caractérisé en ce que** l'élément thermiquement conducteur (7) est pourvu d'une forme annulaire.

4. Accessoire de robinet selon l'une quelconque des revendications 1 à 3, **caractérisé en ce que** l'élément thermiquement conducteur (7) comprend une partie en forme de bague (8) couvrant la zone de contact (4) avec un corps de robinet sur au moins 210° dans une direction circonférentielle.

5. Accessoire de robinet selon la revendication 4, **caractérisé en ce que** l'élément thermiquement conducteur (7) comprend une extension (10) s'étendant dans une direction vers la pièce principale (2) du boîtier.

6. Accessoire de robinet selon la revendication 5, **caractérisé en ce que**, dans le cas d'une forme cylindrique de l'élément thermiquement conducteur (7), l'extension (10) se poursuit en forme de U depuis la partie en forme de bague (8) et, dans le cas d'une forme annulaire de l'élément thermiquement conducteur (7), se poursuit perpendiculairement à la partie en forme de bague (8).

7. Accessoire de robinet selon l'une quelconque des revendications 1 à 6, **caractérisé en ce que** la zone d'accouplement de robinet est agencée dans une douille (3) du boîtier, le capteur de température (5) étant situé dans la douille (3).

8. Accessoire de robinet selon la revendication 7, **caractérisé en ce que** la douille (3) comprend une alvéole (12) dans laquelle est agencé le capteur de température (5), l'alvéole (12) étant ouverte vers la pièce principale (2) du boîtier, l'alvéole (12) étant en particulier ouverte vers une extrémité de la douille opposée à la pièce principale (2) du boîtier et l'extension (10) de l'élément thermiquement conducteur (7) s'étendant jusque dans l'alvéole (12).

9. Accessoire de robinet selon l'une quelconque des revendications 1 à 8, **caractérisé en ce que** l'élément thermiquement conducteur (7) comprend une zone de serrage (15) qui est ouverte dans une direction vers la pièce principale (2) du boîtier et dans laquelle l'élément thermiquement conducteur (7) est serré sur le capteur de température (5) ou le support (6) du capteur de température (5).

10. Accessoire de robinet selon la revendication 9, **caractérisé en ce que** la zone de serrage (15) est agencée au niveau de l'extension (10), en particulier à une extrémité de l'extension (10).

11. Accessoire de robinet selon la revendication 9 ou 10, **caractérisé en ce que**, dans la zone de serrage (15), l'extension (10) est recourbée au moins deux fois, l'extension (10) comprenant une première partie (16) se dirigeant vers la pièce principale (2) du boîtier, une deuxième partie (17) se dirigeant à l'opposé de la pièce principale (2) du boîtier et une troisième partie (18) se dirigeant vers la pièce principale (2) du boîtier, en particulier la deuxième partie (17) et la troisième partie (18) formant un espace d'accueil (19) pour le capteur de température (5) ou le support (6) du capteur de température (5), l'espace d'accueil (19) présentant une hauteur variable, la hauteur étant minimale dans une partie milieu de l'espace d'accueil (19).

12. Accessoire de robinet selon l'une quelconque des revendications 1 à 11, **caractérisé en ce que** le capteur de température (5) est agencé sur un support (6) qui est relié au moyen de commande.

13. Accessoire de robinet selon les revendications 8 et 12, **caractérisé en ce que** le support (6) s'étend jusque dans l'alvéole (12).

14. Accessoire de robinet selon la revendication 12 ou 13, **caractérisé en ce que** le support (6) est plat au moins dans une partie qui se loge dans la zone de serrage (15).

15. Accessoire de robinet selon l'une quelconque des revendications 12 à 14, **caractérisé en ce que** le support (6) présente un certain nombre de fentes (21) ou d'ouvertures.
